Europäisches Patentamt

European Patent Office

Office européen des brevets

(19)

(11)  EP 0 910 185 B1

(12)  FASCICULE DE BREVET EUROPEEN

(45) Date de publication et mention
de la délivrance du brevet:
**17.03.2004  Bulletin 2004/12**

(51) Int Cl.⁷: **H04B 10/18**

(21) Numéro de dépôt: **98402563.5**

(22) Date de dépôt: **15.10.1998**

(54) **Système de transmission à fibre optique à signaux solitons et à multiplexage de longueur d'onde**

Soliton und WDM faseroptisches Übertragungssystem

Soliton and wavelength division multiplexed optical fibre transmission system

(84) Etats contractants désignés:
**ES GB IT SE**

(30) Priorité: **16.10.1997  FR 9712985**

(43) Date de publication de la demande:
**21.04.1999  Bulletin 1999/16**

(73) Titulaire: **ALCATEL**
**75008 Paris (FR)**

(72) Inventeurs:
• **Leclerc, Olivier**
**91240 Saint Michel sur Orge (FR)**
• **Brindel, Patrick**
**91310 Longpont sur Orge (FR)**

(74) Mandataire: **Smith, Bradford Lee et al**
**Compagnie Financière Alcatel,**
**Département de Propriété Industrielle,**
**5, rue Noel Pons**
**92734 Nanterre Cedex (FR)**

(56) Documents cités:
**EP-A- 0 786 877**

• **M.NAKAZAWA ET AL: "100 Gbit/s WDM (20 Gbit/s*5 channels) soliton transmission over 10000 km using in-line synchronous modulation and optical filtering" ELECTRONICS LETTERS., vol. 33, no. 14, 3 juillet 1997, pages 1233-1234, XP002068581 STEVENAGE GB**

**Description**

La présente invention a pour objet un système de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit.

Elle concerne également un procédé de transmission dans un tel système.

La transmission d'impulsions solitons ou solitons dans la partie d'une fibre optique à dispersion anormale est un phénomène connu. Les solitons sont des signaux impulsionnels de forme $\mathrm{sech}^2$. Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus ou gigue Gordon-Haus, impose une limite théorique à la qualité ou au débit des transmissions par solitons.

Pour arriver à dépasser ces limite, il est possible d'utiliser une modulation synchrone des signaux solitons, à l'aide de modulateurs semi-conducteurs. Cette technique limite intrinsèquement le débit de la liaison solitons, du fait de la limite supérieure de la bande passante des modulateurs semi-conducteurs. Il a aussi été proposé des systèmes de filtres guidants glissants, permettant de contrôler la gigue des solitons transmis, voir par exemple EP-A-0 576 208. Il a aussi été proposé, pour assurer la régénération du signal sur la ligne, d'utiliser l'effet Kerr dans des modulateurs synchrones d'amplitude ou de phase. Il a enfin été proposé, pour assurer la régénération signaux solitons, d'utiliser des absorbants saturables.

Par ailleurs, pour augmenter le débit des systèmes de transmission à fibre optique à signaux solitons, il a aussi été proposé d'utiliser un multiplexage de longueur d'onde (en anglais "wavelength division multiplexing ou WDM). Dans ce cas, il est considéré comme avantageux d'utiliser des filtres guidants glissants du type Fabry Perot, qui sont entièrement compatibles avec des signaux mutliplexés en longueur d'onde. En revanche, l'utilisation de modulateurs synchrones ou d'absorbants saturables pour la régénération de signaux solitons multiplexés en longueur d'onde est problématique, du fait de la différence de vitesse de groupe entre les signaux des différents canaux.

Un article de E. Desurvire, O. Leclerc et O. Audouin, Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles $Z_R$ donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles données, à l'aide de modulateurs synchrones discrets. Cette technique d'allocation des longueurs d'ondes du multiplex est aussi décrite dans la demande de brevet français 9600732 du 23 janvier 1996 au nom de Alcatel Submarine Networks. Dans cet article, il est proposé de choisir un sous groupe de canaux, synchrones non seulement à des intervalles $Z_R$, mais aussi à des intervalles sous multiples de $Z_R$.

Un autre article de O. Leclerc, E. Desurvire et O. Audouin, Optical Fiber Technology, 3 pages 97-116 (1997) précise que ce schéma d'allocation des longueurs d'ondes peut conduire à des intervalles $Z_R$ trop importants entre les modulateurs synchrones, ou encore à des espacement trop importants entre les canaux du multiplex. Pour pallier ce problème, cet article note que dans un tel schéma d'allocation de longueurs d'onde, les temps bit de sous-ensembles de canaux du multiplex sont synchrones à des intervalles sous-multiples de $Z_R$. L'article propose en conséquence de régénérer, à des intervalles plus faibles, des sous-ensembles de canaux du multiplex.

Toutefois, cette solution impose un filtrage des canaux du sous-ensemble à régénérer, et fait perdre au système de transmission la périodicité unique pour tous les canaux.

La présente invention propose une solution originale et simple au problème de la modulation synchrone de signaux solitons multiplexés en longueur d'onde. Elle permet d'éviter les inconvénients mentionnés plus haut. L'invention assure une modulation simultanée de tous les canaux du multiplex.

Plus précisément, l'invention propose un système de transmission à fibre optique à multiplexage de longueur d'onde et à signaux solitons avec une période d'horloge T, dans lequel les longueurs d'onde ($\lambda_1$ à $\lambda_n$) des différents canaux du multiplex sont choisies de sorte qu'en au moins un point du système de transmission, la différence entre les temps bits de deux canaux du multiplex est sensiblement une fraction $(k/N)T$ de la période d'horloge, k étant un entier, le système comprenant au moins au dit point un modulateur synchrone pour moduler les signaux solitons à une fréquence $N/T$ multiple de la fréquence d'horloge des solitons $1/T$.

Avantageusement, les longueurs d'onde ($\lambda_1$ à $\lambda_n$) des différents canaux du multiplex sont choisies de sorte en ce une pluralité de points du système de transmission distants d'un intervalle ($Z_R$), la différence entre les temps bits de deux canaux du multiplex est sensiblement une fraction $(k/N)T$ de la période d'horloge, le système comprenant en chacun des dits points un modulateur synchrone pour moduler les signaux solitons à une fréquence $N/T$ multiple de la fréquence d'horloge des solitons $1/T$.

Dans un mode de réalisation, les longueurs d'onde ($\lambda_1$ à $\lambda_n$) des différents canaux du multiplex sont choisies de sorte en ce qu'au moins un autre point du système de transmission, la différence entre les temps bits de deux canaux du multiplex est sensiblement égale à la période d'horloge T, le système comprenant au dit au moins autre point un modulateur synchrone pour moduler les signaux solitons à la fréquence d'horloge des solitons 1/T.

De préférence, les longueurs d'onde ($\lambda_1$ à $\lambda_n$) des différents canaux du multiplex sont choisies de sorte en ce qu'en une pluralité d'autres points du système de transmission distants d'un intervalle ($Z_R$), la différence entre les temps bits de deux canaux du multiplex est sensiblement égale à la période d'horloge T, le système comprenant en chacun des dits autres points un modulateur synchrone pour moduler les signaux solitons à la fréquence d'horloge des solitons 1/T.

Dans un mode de réalisation, au dit point ou en chacun des dits points, la différence $d_i$ entre les temps bit d'un canal de longueur d'onde $\lambda_i$ du multiplex, et du premier canal de longueur d'onde $\lambda_1$ satisfait la relation

$$|d_i - k_i.T/N| < T/4$$

$k_i$ étant un entier dépendant du canal.

Avantageusement, au dit autre point ou en chacun des dits autres points, la différence $d_i$ entre les temps bit d'un canal de longueur d'onde $\lambda_i$ du multiplex, et du premier canal de longueur d'onde $\lambda_1$ satisfait la relation

$$|d_i| < T/4$$

On peut aussi prévoir que pour toute longueur d'onde $\lambda_i$ du multiplex, et pour un intervalle ($Z_R$), la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal.

Au cas où le système est un système sans compensation de la pente de dispersion, les longueurs d'onde ($\lambda_1$ à $\lambda_n$) des différents canaux du multiplex sont avantageusement choisies de sorte que pour un intervalle ($Z_R$),

$$(k_i.T - T/4) < D'_0.\Delta\lambda_{i1}.(\Delta\lambda_{i1} + 2.\Delta\lambda_{10}).Z_R/2 < (k_i.T + T/4)$$

avec $k_i$ un entier dépendant du canal;

$D'_0$ la pente de dispersion;
$\Delta\lambda_{i1}$ la différence de longueur d'onde entre les canaux i et 1;
$\Delta\lambda_{10}$ la différence de longueur d'onde entre le premier canal et la longueur d'onde de dispersion nulle $\lambda_0$.

Si le système est un système à compensation de la pente de dispersion, les longueurs d'onde ($\lambda_1$ à $\lambda_n$) des différents canaux du multiplex sont de préférence choisies de sorte que pour un intervalle ($Z_R$),

$$(k_i.T - T/4) < D_m.\Delta\lambda_{i1}.Z_R/2 < (k_i.T + T/4)$$

avec $k_i$ un entier dépendant du canal;

$D_m$ la pente de dispersion moyenne pour les longueur d'onde ($\lambda_1$ à $\lambda_n$);
$\Delta\lambda_{i1}$ la différence de longueur d'onde entre les canaux i et 1.

Dans un mode de réalisation, le modulateur à la fréquence N/T est un modulateur d'intensité, dont la profondeur de modulation est choisie de sorte à compenser, par rapport à un modulateur à la fréquence 1/T, les effets de la modulation à la fréquence N/T sur la profondeur de modulation

Dans un autre mode de réalisation, le modulateur à la fréquence N/T est un modulateur d'intensité, dont la profondeur de modulation est choisie de sorte à compenser, par rapport à un modulateur à la fréquence 1/T, les effets de la modulation à la fréquence N/T sur la profondeur de modulation, exprimés par la formule suivante:

$$IM_N = 20.\log(N) - 10.\log[N^2 - 1 + 10^{\wedge}(IM_1/10)]$$

avec

$IM_N$ la profondeur de modulation du modulateur à la fréquence N/T;
$IM_1$ la profondeur de modulation du modulateur à la fréquence 1/T.

L'invention propose aussi un procédé de transmission dans un système à fibre optique à signaux solitons et à multiplexage de longueur d'onde, dans lequel les temps bit des différents canaux ($\lambda_1$ à $\lambda_n$) du multiplex sont choisies de sorte qu'en au moins un point du système de transmission, la différence entre les temps bits de deux canaux du multiplex est sensiblement un sous multiple T/N de la période d'horloge sensiblement synchrones en au moins un point, caractérisé par au moins une étape de régénération synchrone des signaux des canaux du multiplex au dit point par modulation synchrone à la fréquence N/T multiple de la fréquence d'horloge des solitons 1/T.

De préférence, les longueurs d'onde ($\lambda_1$ à $\lambda_n$) des différents canaux du multiplex sont choisies de sorte en ce une pluralité de points du système de transmission distants d'un intervalle ($Z_R$), la différence entre les temps bits de deux canaux du multiplex est sensiblement un sous multiple T/N de la période d'horloge, le procédé comprenant une pluralité d'étapes de régénération synchrone des signaux des canaux du multiplex en chacun des dits points par modulation synchrone à une fréquence N/T multiple de la fréquence d'horloge des solitons 1/T.

Avantageusement, les longueurs d'onde ($\lambda_1$ à $\lambda_n$) des différents canaux du multiplex sont choisies de sorte en ce qu'au moins un autre point du système de transmission, la différence entre les temps bits de deux canaux du multiplex est sensiblement égale à la période d'horloge T, le procédé comprenant une étape de régénération synchrone des signaux des canaux du multiplex au dit au moins autre point par modulation synchrone pour à la fréquence d'horloge des solitons 1/T.

On peut choisir les longueurs d'onde ($\lambda_1$ à $\lambda_n$) des différents canaux du multiplex de sorte qu'en une pluralité d'autres points du système de transmission distants d'un intervalle ($Z_R$), la différence entre les temps bits de deux canaux du multiplex est sensiblement égale à la période d'horloge T, le procédé comprenant une pluralité d'étapes de régénération synchrone des signaux des canaux du multiplex en chacun des dits autres points par modulation synchrone à la fréquence d'horloge des solitons 1/T.

On peut aussi choisir les longueurs d'onde ($\lambda_1$ à $\lambda_n$) des différents canaux du multiplex de sorte qu'au dit point ou en chacun des dits points, la différence $d_i$ entre les temps bit d'un canal de longueur d'onde $\lambda_i$ du multiplex, et du premier canal de longueur d'onde $\lambda_1$ satisfait la relation

$$|d_i - k_i.T/N| < T/4$$

$k_i$ étant un entier dépendant du canal.

De préférence, les longueurs d'onde ($\lambda_1$ à $\lambda_n$) des différents canaux du multiplex sont choisies de sorte qu'au dit autre point ou en chacun des dits autres points, la différence $d_i$ entre les temps bit d'un canal de longueur d'onde $\lambda_i$ du multiplex, et du premier canal de longueur d'onde $\lambda_1$ satisfait la relation

$$|d_i| < T/4$$

Avantageusement, les longueurs d'onde ($\lambda_1$ à $\lambda_n$) des différents canaux du multiplex sont choisies de sorte que pour toute longueur d'onde $\lambda_i$ du multiplex, et pour un intervalle ($Z_R$), la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal.

Si le système est un système sans compensation de la pente de dispersion, les longueurs d'onde ($\lambda_1$ à $\lambda_n$) des différents canaux du multiplex sont de préférence choisies de sorte que pour un intervalle ($Z_R$),

$$(k_i.T - T/4) < D'_0.\Delta\lambda_{i1}.(\Delta\lambda_{i1} + 2.\Delta\lambda_{10}).Z_R/2 < (k_i.T + T/4)$$

avec $k_i$ un entier dépendant du canal;

D'o la pente de dispersion;
$\Delta\lambda_{i1}$ la différence de longueur d'onde entre les canaux i et 1;
$\Delta\lambda_{10}$ la différence de longueur d'onde entre le premier canal et la longueur d'onde de dispersion nulle $\lambda_0$.

Si le système est un système à compensation de la pente de dispersion, les longueurs d'onde ($\lambda_1$ à $\lambda_n$) des différents canaux du multiplex sont avantageusement choisies de sorte que pour un intervalle ($Z_R$),

$$(k_i.T - T/4) < D_m.\Delta\lambda_{i1}.Z_R < (k_i.T + T/4)$$

avec $k_i$ un entier dépendant du canal;

$D_m$ la pente de dispersion moyenne pour les longueur d'onde ($\lambda_1$ à $\lambda_n$);
$\Delta\lambda_{i1}$ la différence de longueur d'onde entre les canaux i et 1.

Dans un mode de réalisation, la modulation synchrone à la fréquence N/T est une modulation d'intensité, dont la profondeur de modulation est choisie de sorte à compenser, par rapport à un modulateur à la fréquence 1/T, les effets de la modulation à la fréquence N/T sur la profondeur de modulation, exprimés par la formule suivante:

$$IM_N = 20.\log(N) - 10.\log[N^2 - 1 + 10^{\wedge}(IM_1/10)]$$

avec

$IM_N$ la profondeur de modulation du modulateur à la fréquence N/T;
$IM_1$ la profondeur de modulation du modulateur à la fréquence 1/T.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un système de transmission selon un premier mode de réalisation de l'invention;
- figure 2, un système de transmission selon l'invention.

L'invention s'applique à un système de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit. Pour cela, on peut utiliser les solutions d'allocation de longueurs d'onde décrits dans les articles de E. Desurvire et O. Leclerc mentionnés plus haut. Ces articles sont incorporés par référence à la présente description, en ce qui concerne les schémas d'allocation de longueur d'ondes.

Un tel schéma d'allocation de longueurs d'ondes assure, à intervalles réguliers $Z_R$ le long de la fibre, un glissement relatif entre les différents canaux sensiblement égal à un multiple du temps bit. Ceci peut s'exprimer, pour chaque canal, par la formule:

$$(k_i.T - T/4) < \delta\tau_i.Z_R < (k_i.T + T/4)$$

où T est le temps bit, $k_i$ un entier dépendant du canal, et $\delta\tau_i$ le glissement du canal i par rapport au canal 1. Cette formule traduit le fait qu'à des intervalles $Z_R$, les décalages entre les différents canaux provoqués par le glissement sont, à un quart de temps bit près, des multiples entiers du temps bit. On assure ainsi une coïncidence exacte ou quasi exacte des temps bits avec un intervalle de $Z_R$, dans la mesure où les temps bits coïncident exactement ou quasi exactement à l'émission.

Le problème de tels schémas d'allocation de longueurs d'onde, comme expliqué plus haut, est la distance entre les points de synchronicité des canaux. L'article de E. Desurvire mentionné plus haut donne l'exemple suivant dans le cas d'un système non-DSC (sans compensation de la pente de dispersion): pour un WDM à 10 Gbit/s, avec un temps bit $T_{bit}$ de 100 ps, un espacement entre canaux $\Delta\lambda$ = 1 nm, et une pente de dispersion $D'_0$ = 7.10^{-2} ps/nm^2.

km, l'intervalle $Z_R$ entre les points de synchronicité est de 1428,6 km. Inversement, les formules correspondantes montrent que pour un WDM à 10 Gbit/s, avec un temps bit $T_{bit}$ de 100 ps, si l'on fixe un intervalle $Z_R$ = 100 km, on obtient

- pour un système non-DSC, avec $D'_0$ = 7.10$^{-2}$ ps/nm$^2$.km, un espacement entre canaux $\Delta\lambda$ = 3,8 nm; ou
- pour un système DSC, avec <D> = 0,4 ps/nm.km, un espacement entre canaux $\Delta\lambda$ = 2,5 nm.

Dans un cas, l'intervalle $Z_R$ est trop important; dans l'autre, l'espacement entre les canaux est trop important pour un multiplex en longueur d'onde. La solution de l'article de E. Desurvire mentionné plus haut ne fournit pas une solution à ce problème; la solution de l'article de O, Leclerc implique un filtrage.

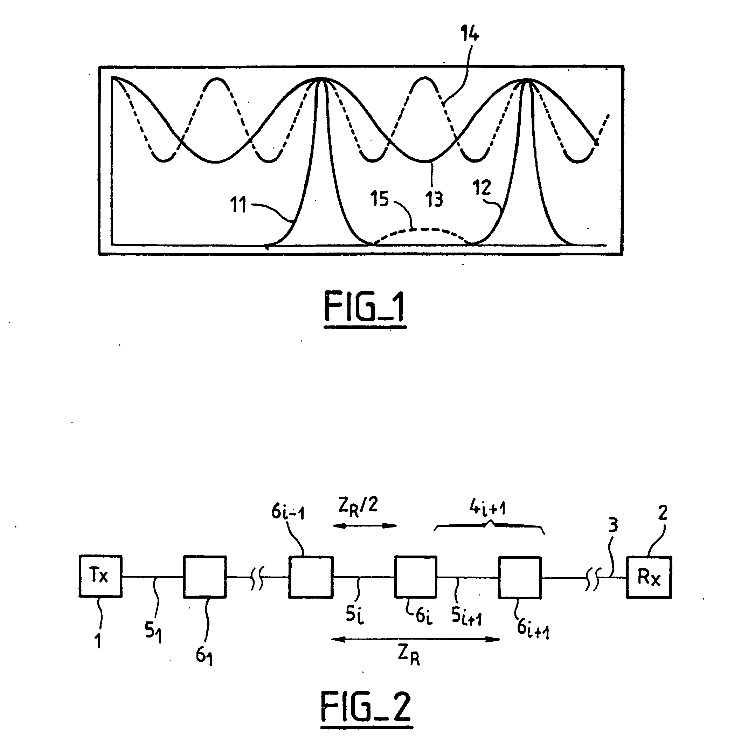

L'invention propose une solution à ces problèmes. Elle repose sur le fait que la modulation synchrone de signaux solitons peut être réalisée non seulement à l'aide d'un signal de modulation à la fréquence bit ou fréquence d'horloge des solitons, mais aussi à l'aide d'un signal de modulation à une fréquence multiple de cette fréquence d'horloge. La figure 1 montre à titre d'exemple, dans un diagramme de puissance en fonction du temps, deux solitons 11 et 12; le signal 13 en trait plein est un signal de modulation à la fréquence d'horloge 1/T, et le signal 14 en trait interrompus montre un signal de modulation à une fréquence 2/T double de la fréquence d'horloge. Le signal à la fréquence 2/T module les solitons; le trait interrompu 15 montre l'effet de la modulation par le signal à la fréquence 2/T sur le bruit.

Cette accumulation de bruit est acceptable. En outre, dans le cas où l'on prévoit au moins une modulation à la fréquence 1/T, tous les N répéteurs, comme expliqué plus bas, ce bruit est supprimé par la modulation à 1/T.

Une telle modulation permet de moduler des signaux décalés non seulement d'une période d'horloge, mais aussi des signaux décalés d'un sous multiple de la période d'horloge.

En conséquence, l'invention propose de moduler les différents canaux du multiplex à une fréquence multiple de la fréquence d'horloge; ceci permet une modulation des solitons de tous les canaux à des intervalles inférieurs à ZR, sans qu'il soit nécessaire de filtrer les canaux. Dans un schéma d'allocation de longueurs d'onde tel que ceux décrits plus haut, ceci suppose simplement que la modulation s'effectue à une fréquence N/T multiple de la fréquence d'horloge des solitons 1/T, en un point où la différence entre les temps bits de deux canaux du multiplex est sensiblement une fraction kT/N de la période d'horloge.

La figure 2 montre un premier mode de réalisation d'un système de transmission selon l'invention, dans le cas le plus simple où N=2. Le système de transmission de la figure 1 comprend un émetteur Tx 1, un récepteur Rx 2 relié à un tronçon de fibre 3, et n tronçons $4_i$, i= 1 à p. L'émetteur 1 émettant vers le premier tronçon i = 1 des impulsions solitons, dans différents canaux d'un multiplex de longueur d'onde, à des longueurs d'onde $\lambda_1$ à $\lambda_n$. Les différentes longueurs d'onde sont choisies suivant un schéma d'allocation des fréquence assurant, pour un intervalle $Z_R$ donné, un glissement relatif entre les différents canaux sensiblement égal à un multiple du temps bit. Le dernier tronçon i = p est relié à la fibre 3 qui transmet les impulsions solitons au récepteur 3.

Chaque tronçon $4_i$ comprend une longueur de fibre $5_i$, dont la sortie est reliée à un répéteur $6_i$; la sortie du répéteur est reliée à la fibre $5_{i+1}$ du tronçon suivant, ou pour le dernier tronçon d'indice p, à la fibre 3. La longueur de chaque tronçon correspond à l'intervalle $Z_R$/N, soit $Z_R$/2 dans le cas de la figure 2, de sorte à pouvoir procéder à une modulation à l'extrémité de chacun des tronçons, si nécessaire.

Chaque répéteur comprend un modulateur synchrone, qui module l'ensemble des canaux du multiplex; le répéteur peut comprendre, comme cela est clair pour l'homme de l'art, des amplificateurs ou des filtres; on peut notamment prévoir tout amplificateur de tout type connu, et par exemple un amplificateur à fibre dopée, comme un amplificateur à fibre dopée à l'Erbium (acronyme EFDA en langue anglaise).

En arrivant au premier répéteur $6_i$, i=1, après un parcours de $Z_R$/2, les signaux des différents canaux du multiplex ont subi des glissements différents; le choix du schéma d'allocation des longueurs d'onde est tel que les temps bit des différents canaux sont sensiblement synchrones, ou décalés d'une demi-période d'horloge T/2.

Ceci peut aussi s'exprimer par la relation suivante

$$|d_i| < T/4 \qquad \text{ou} \qquad |d_i - T/2| < T/4$$

où $d_i$ est la différence $d_i$ entre les temps bit d'un canal de longueur d'onde $\lambda_i$ du multiplex, et du premier canal de longueur d'onde $\lambda_1$. Cette relation signifie qu'à T/4 près, les temps bit des différents canaux sont synchrones ou décalés de T/2. Cette différence de T/4 est suffisamment faible pour ne pas perturber la modulation.

Cette condition peut aussi s'exprimer par la différence $\delta\tau_i$ entre le glissement par unité de longueur sur le canal i et sur le premier canal :

$$(k_i.T - T/4) < \delta\tau_i.Z_R < (k_i.T + T/4)$$

avec $k_i$ un entier dépendant du canal.

Il est clair dans ce cas qu'après un intervalle de $Z_R/2$, les temps bit des différents canaux sont synchrones ou décalés de T/2.

Dans le premier répéteur, les signaux des différents canaux sont modulés par un modulateur à la fréquence 2/T. Ce modulateur module tous les canaux en même temps, sans qu'il soit nécessaire de prévoir de séparation des canaux.

En arrivant au deuxième répéteur $6_i$, i=2, après un parcours de $Z_R$, les signaux des différents canaux du multiplex ont subi des glissements différents; le choix du schéma d'allocation des longueurs d'onde fait que les temps bit des différents canaux sont alors sensiblement synchrones. On peut ainsi procéder dans le deuxième répéteur à une modulation à une fréquence 1/T.

On peut ainsi procéder, dans chaque répéteur d'indice impair, à une modulation synchrone à la fréquence 2/T, et dans chaque répéteur d'indice impair, à une modulation synchrone à la fréquence 1/T.

Par analogie, on pourrait prévoir des répéteurs distants de $Z_R/N$, et utiliser des modulateurs synchrones à la fréquence N/T dans les répéteurs d'indice i non multiple de N, et à la fréquence 1/T d'indice i multiple de N. On aurait ainsi, pour N=3, une succession de groupes de deux répéteurs à 3/T et d'un répéteur à 1/T.

Il est aussi clair que la fréquence de modulation peut être inférieure à N/T dans certains cas; ainsi, pour N=4, la fréquence de modulation après une distance $k.Z_R + Z_R/4$ ou après une distance de $k.Z_R + 3Z_R/4$ est de 4/T; après une distance de $k.Z_R + Z_R/2$ une fréquence de modulation de 2/T convient; après une distance de $k.Z_R$, on peut moduler avec une fréquence 1/T.

La modulation peut être assurée par tous les moyens connus de l'homme de l'art.

Les conditions de synchronicité des différents canaux peuvent s'exprimer de la façon suivante, dans un système de transmission avec ou sans compensation de la pente de dispersion.

Dans un système sans compensation de la pente de dispersion, cette condition s'écrit :

$$(k_i.T - T/4) < D'_0.\Delta\lambda_{i1}.(\Delta\lambda_{i1} + 2.\Delta\lambda_{10}).Z_R/2 < (k_i.T + T/4)$$

soit, en notant Z l'intervalle $Z_R/N$ entre les positions possibles des répéteurs.

$$(k_i.T/N - T/4) < D'_0.\Delta\lambda_{i1}.(\Delta\lambda_{i1} + 2.\Delta\lambda_{10}).Z/2 < (k_i.T/N + T/4)$$

avec

$k_i$ un entier dépendant du canal;
$D'_0$ la pente de dispersion;
$\Delta\lambda_{i1}$ la différence de longueur d'onde entre les canaux i et 1;
$\Delta\lambda_{10}$ la différence de longueur d'onde entre le premier canal et la longueur d'onde de dispersion nulle $\lambda_0$.

Dans un système avec compensation de la pente de dispersion, cette condition s'écrit :

$$(k_i.T - T/4) < D_m.\Delta\lambda_{i1}.Z_R/2 < (k_i.T + T/4)$$

soit, en notant Z l'intervalle $Z_R/N$ entre les positions possibles des répéteurs.

$$(k_i.T/N - T/4) < D_m.\Delta\lambda_{i1}.Z/2 < (k_i.T/N + T/4)$$

avec

$k_i$ un entier dépendant du canal;
$D_m$ la pente de dispersion moyenne pour les longueur d'onde ($\lambda_1$ à $\lambda_n$);
$\Delta\lambda_{i1}$ la différence de longueur d'onde entre les canaux i et 1.

On arrive avec ces conditions à disposer les canaux du multiplex de façon satisfaisante. Dans l'exemple de la figure 1, avec N=2, on peut choisir un WDM à 10 Gbit/s, avec un temps bit $T_{bit}$ de 100 ps, un intervalle Z entre répéteurs de 100 km ($Z_R = 2.Z = 200$ km), et obtenir

- pour un système non-DSC, avec D'$_0$ = 7.10$^{-2}$ ps/nm$^2$.km, un espacement entre canaux $\Delta\lambda$ = 2,68 nm, et $\Delta\lambda_{10}$ = 1,34 nm; ou
- pour un système DSC, avec <D> = 0,4 ps/nm.km, un espacement entre canaux $\Delta\lambda$ = 1,25 nm.

L'invention rend économiquement possible un système de transmission avec un pas dé régénération court, par exemple de l'ordre de 100 km, qui assure un contrôle efficace de la qualité de la transmission.

Dans le cas d'une modulation d'intensité par un signal, l'effet de la modulation est fonction de la courbure du signal de modulation, voir par exemple H. Kubota et M. Nakazama, Soliton Transmission Control in Time and Frequency Domains, IEEE Journal of Quantum Electronics, vol. 29 no 7, Juillet 1993, pages 2189 et suivantes. Par rapport à un modulateur utilisant un signal de modulation sinusoïdal à la fréquence 1/T, l'amplitude de modulation d'un modulateur utilisant un signal de modulation sinusoïdal à la fréquence N/T de même amplitude est donnée par

$$IM_N = 20.\log(N) - 10.\log[N^2 - 1 + 10^{\wedge}(IM_1/10)]$$

avec

$IM_N$ la profondeur de modulation du modulateur à la fréquence N/T;
$IM_1$ la profondeur de modulation du modulateur à la fréquence 1/T.

L'invention propose donc de compenser l'effet de l'augmentation de la fréquence du signal de modulation sur la profondeur de modulation. On choisit donc avantageusement des profondeurs de modulation différentes pour les modulateurs à la fréquence 1/T et à la fréquence N/T, de sorte à ce que les effets de la modulation sur les signaux solitons soient les mêmes.

Dans le cas N=2, si on choisit par exemple une profondeur de modulation $IM_1$ de 10 dB pour les modulateurs d'indice pair de la figure 2 (modulateurs à la fréquence 1/T), on choisit avantageusement une profondeur de modulation de 1,1 dB pour les modulateurs à la fréquence 2/T, de sorte à compenser les effets de l'augmentation de la fréquence de modulation.

Bien entendu, la présente invention n'est pas limitée aux exemples et modes de réalisation décrits et représentés, mais elle est susceptible de nombreuses variantes accessibles à l'homme de l'art, dans l'énoncé des revendications. Ainsi, on peut clairement procéder dans tous les répéteurs à une modulation synchrone à la fréquence N/T; il est encore possible de ne procéder à la modulation que dans certains des répéteurs.

Le schéma d'allocation de longueurs d'onde n'est aucunement limité aux exemples décrits. Il faut aussi noter que l'on peut, par rapport aux modes de réalisation décrits, ajouter ou enlever des filtres ou des amplificateurs, en fonction des besoins. Enfin, l'invention a été décrite dans le cas d'une transmission monodirectionnelle. Elle s'applique à l'évidence à une transmission bidirectionnelle.

**Revendications**

1. Système de transmission à fibre optique à multiplexage de longueur d'onde et à signaux solitons avec une période d'horloge T, dans lequel les longueurs d'onde ($\lambda_1$ à $\lambda_n$) des différents canaux du multiplex sont choisies de sorte qu'en au moins un point du système de transmission, la différence entre les temps bits de deux canaux du multiplex est sensiblement une fraction (k/N)T de la période d'horloge, k étant un entier,
le système comprenant au moins au dit point un modulateur synchrone pour moduler les signaux solitons à une fréquence N/T multiple de la fréquence d'horloge des solitons 1/T.

2. Système de transmission selon la revendication 1, **caractérisé en ce que** les longueurs d'onde ($\lambda_1$ à $\lambda_n$) des différents canaux du multiplex sont choisies de sorte en ce une pluralité de points du système de transmission distants d'un intervalle ($Z_R$), la différence entre les temps bits de deux canaux du multiplex est sensiblement une fraction (k/N)T de la période d'horloge,
le système comprenant en chacun des dits points un modulateur synchrone pour moduler les signaux solitons à une fréquence N/T multiple de la fréquence d'horloge des solitons 1/T.

3. Système de transmission selon la revendication 1 ou 2, **caractérisé en ce que** les longueurs d'onde ($\lambda_1$ à $\lambda_n$) des différents canaux du multiplex sont choisies de sorte **en ce qu'**au moins un autre point du système de transmission, la différence entre les temps bits de deux canaux du multiplex est sensiblement égale à la période d'horloge T,
le système comprenant au dit au moins autre point un modulateur synchrone pour moduler les signaux solitons à la fréquence d'horloge des solitons 1/T.

4. Système de transmission selon la revendication 1, 2 ou 3, **caractérisé en ce que** les longueurs d'onde ($\lambda_1$ à $\lambda_n$) des différents canaux du multiplex sont choisies de sorte **en ce qu'**en une pluralité d'autres points du système de transmission distants d'un intervalle ($Z_R$), la différence entre les temps bits de deux canaux du multiplex est sensiblement égale à la période d'horloge T,

le système comprenant en chacun des dits autres points un modulateur synchrone pour moduler les signaux solitons à la fréquence d'horloge des solitons 1/T.

5. Système de transmission selon l'une des revendications 1 à 4, **caractérisé en ce qu'**au dit point ou en chacun des dits points, la différence $d_i$ entre les temps bit d'un canal de longueur d'onde $\lambda_i$ du multiplex, et du premier canal de longueur d'onde $\lambda_1$ satisfait la relation

$$|d_i - k_i.T/N| < T/4$$

$k_i$ étant un entier dépendant du canal.

6. Système de transmission selon l'une des revendications 3 à 5 , **caractérisé en ce qu'**au dit autre point ou en chacun des dits autres points, la différence $d_i$ entre les temps bit d'un canal de longueur d'onde $\lambda_i$ du multiplex, et du premier canal de longueur d'onde $\lambda_1$ satisfait la relation

$$|d_i| < T/4$$

7. Système de transmission selon l'une des revendications 1 à 6, **caractérisé en ce que** pour toute longueur d'onde $\lambda_i$ du multiplex, et pour un intervalle ($Z_R$), la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal.

8. Système de transmission selon l'une des revendications 1 à 7, **caractérisé en ce que** le système est un système sans compensation de la pente de dispersion, et **en ce que** les longueurs d'onde ($\lambda_1$ à $\lambda_n$) des différents canaux du multiplex sont choisies de sorte que pour un intervalle ($Z_R$),

$$(k_i.T - T/4) < D'_0.\Delta\lambda_{i1}.(\Delta\lambda_{i1} + 2.\Delta\lambda_{10}).Z_R/2 < (k_i.T + T/4)$$

avec $k_i$ un entier dépendant du canal;

$D'_0$ la pente de dispersion;
$\Delta\lambda_{i1}$ la différence de longueur d'onde entre les canaux i et 1;
$\Delta\lambda_{10}$ la différence de longueur d'onde entre le premier canal et la longueur d'onde de dispersion nulle $\lambda_0$.

9. Système de transmission selon l'une des revendications 1 à 7, **caractérisé en ce que** le système est un système à compensation de la pente de dispersion, et **en ce que** les longueurs d'onde ($\lambda_1$ à $\lambda_n$) des différents canaux du multiplex sont choisies de sorte que pour un intervalle ($Z_R$),

$$(k_i.T - T/4) < D_m.\Delta\lambda_{i1}.Z_R/2 < (k_i.T + T/4)$$

avec $k_i$ un entier dépendant du canal;

$D_m$ la pente de dispersion moyenne pour les longueur d'onde ($\lambda_1$ à $\lambda_n$);
$\Delta\lambda_{i1}$ la différence de longueur d'onde entre les canaux i et 1.

**10.** Système selon l'une des revendications 1 à 9, **caractérisé en ce que** ledit modulateur à la fréquence N/T est un modulateur d'intensité, dont la profondeur de modulation est choisie de sorte à compenser, par rapport à un modulateur à la fréquence 1/T, les effets de la modulation à la fréquence N/T sur la profondeur de modulation

**11.** Système selon l'une des revendications 1 à 10, **caractérisé en ce que** ledit modulateur à la fréquence N/T est un modulateur d'intensité, dont la profondeur de modulation est choisie de sorte à compenser, par rapport à un modulateur à la fréquence 1/T, les effets de la modulation à la fréquence N/T sur la profondeur de modulation, exprimés par la formule suivante:

$$IM_N = 20.\log(N) - 10.\log[N^2 - 1 + 10^{\wedge}(IM_1/10)]$$

avec

$IM_N$ la profondeur de modulation du modulateur à la fréquence N/T;
$IM_1$ la profondeur de modulation du modulateur à la fréquence 1/T.

**12.** Procédé de transmission dans un système à fibre optique à signaux solitons et à multiplexage de longueur d'onde, dans lequel les temps bit des différents canaux ($\lambda_1$ à $\lambda_n$) du multiplex sont choisies de sorte qu'en au moins un point du système de transmission, la différence entre les temps bits de deux canaux du multiplex,est sensiblement un sous multiple T/N de la période d'horloge sensiblement synchrones en au moins un point,
**caractérisé par** au moins une étape de régénération synchrone des signaux des canaux du multiplex au dit point par modulation synchrone à la fréquence N/T multiple de la fréquence d'horloge des solitons 1/T.

**13.** Procédé de transmission selon la revendication 12, **caractérisé en ce que** les longueurs d'onde ($\lambda_1$ à $\lambda_n$) des différents canaux du multiplex sont choisies de sorte en ce une pluralité de points du système de transmission distants d'un intervalle ($Z_R$), la différence entre les temps bits de deux canaux du multiplex est sensiblement un sous multiple T/N de la période d'horloge,
le procédé comprenant une pluralité d'étapes de régénération synchrone des signaux des canaux du multiplex en chacun des dits points par modulation synchrone à une fréquence N/T multiple de la fréquence d'horloge des solitons 1/T.

**14.** Procédé de transmission selon la revendication 12 ou 13, **caractérisé en ce que** les longueurs d'onde ($\lambda_1$ à $\lambda_n$) des différents canaux du multiplex sont choisies de sorte **en ce qu'**au moins un autre point du système de transmission, la différence entre les temps bits de deux canaux du multiplex est sensiblement égale à la période d'horloge T,
le procédé comprenant une étape de régénération synchrone des signaux des canaux du multiplex au dit au moins autre point par modulation synchrone pour à la fréquence d'horloge des solitons 1/T.

**15.** Procédé de transmission selon la revendication 12, 13 ou 14, **caractérisé en ce que** les longueurs d'onde ($\lambda_1$ à $\lambda_n$) des différents canaux du multiplex sont choisies de sorte qu'en une pluralité d'autres points du système de transmission distants d'un intervalle ($Z_R$), la différence entre les temps bits de deux canaux du multiplex est sensiblement égale à la période d'horloge T,
le procédé comprenant une pluralité d'étapes de régénération synchrone des signaux des canaux du multiplex en chacun des dits autres points par modulation synchrone à la fréquence d'horloge des solitons 1/T.

**16.** Procédé de transmission selon l'une des revendications 12 à 15, **caractérisé en ce que** les longueurs d'onde ($\lambda_1$ à $\lambda_n$) des différents canaux du multiplex sont choisies de sorte qu'au dit point ou en chacun des dits points, la différence $d_i$ entre les temps bit d'un canal de longueur d'onde $\lambda_i$ du multiplex, et du premier canal de longueur d'onde $\lambda_1$ satisfait la relation

$$|d_i - k_i.T/N| < T/4$$

$k_i$ étant un entier dépendant du canal.

**17.** Procédé de transmission selon l'une des revendications 14 à 16, **caractérisé en ce que** les longueurs d'onde ($\lambda_1$ à $\lambda_n$) des différents canaux du multiplex sont choisies de sorte qu'au dit autre point ou en chacun des dits autres points, la différence di entre les temps bit d'un canal de longueur d'onde $\lambda_i$ du multiplex, et du premier canal de longueur d'onde $\lambda_1$ satisfait la relation

$$|d_i| < T/4$$

18. Procédé de transmission selon l'une des revendications 12 à 17, **caractérisé en ce que** les longueurs d'onde ($\lambda_1$ à $\lambda_n$) des différents canaux du multiplex sont choisies de sorte que pour toute longueur d'onde $\lambda_i$ du multiplex, et pour un intervalle ($Z_R$), la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

   avec $k_i$ un entier dépendant du canal.

19. Procédé de transmission selon l'une des revendications 12 à 18, **caractérisé en ce que** le système est un système sans compensation de la pente de dispersion, et **en ce que** les longueurs d'onde ($\lambda_1$ à $\lambda_n$) des différents canaux du multiplex sont choisies de sorte que pour un intervalle ($Z_R$),

$$(k_i.T - T/4) < D'_0.\Delta\lambda_{i1}.(\Delta\lambda_{i1} + 2.\Delta\lambda_{10}).Z_R/2 < (k_i.T + T/4)$$

   avec $k_i$ un entier dépendant du canal;

   D'o la pente de dispersion;
   $\Delta\lambda_{i1}$ la différence de longueur d'onde entre les canaux i et 1;
   $\Delta\lambda_{10}$ la différence de longueur d'onde entre le premier canal et la longueur d'onde de dispersion nulle $\lambda_0$.

20. Procédé de transmission selon l'une des revendications 12 à 18, **caractérisé en ce que** le système est un système à compensation de la pente de dispersion, et **en ce que** les longueurs d'onde ($\lambda_1$ à $\lambda_n$) des différents canaux du multiplex sont choisies de sorte que pour un intervalle ($Z_R$),

$$(k_i.T - T/4) < D_m.\Delta\lambda_{i1}.Z_R < (k_i.T + T/4)$$

   avec $k_i$ un entier dépendant du canal;

   $D_m$ la pente de dispersion moyenne pour les longueur d'onde ($\lambda_1$ à $\lambda_n$);
   $\Delta\lambda_{i1}$ la différence de longueur d'onde entre les canaux i et 1.

21. Procédé selon l'une des revendications 12 à 20, **caractérisé en ce que** la modulation synchrone à la fréquence N/T est une modulation d'intensité, dont la profondeur de modulation est choisie de sorte à compenser, par rapport à un modulateur à la fréquence 1/T, les effets de la modulation à la fréquence N/T sur la profondeur de modulation, exprimés par la formule suivante:

$$IM_N = 20.\log(N) - 10.\log[N^2 - 1 + 10^{(IM_1/10)}]$$

   avec

   $IM_N$ la profondeur de modulation du modulateur à la fréquence N/T;
   $IM_1$ la profondeur de modulation du modulateur à la fréquence 1/T.

**Claims**

1. An optical fiber transmission system using soliton signals with wavelength division multiplexing having a clock period T, in which the wavelengths, $\lambda_1$ to $\lambda_n$, of the various channels of the multiplex are selected in such a manner that at least at one point in the transmission system, the difference between the bit times of any two channels of the multiplex is substantially equal to a fraction kT/N of the clock period, where $\underline{k}$ is an integer,

the system including, at least at said point, a synchronous modulator for modulating the soliton signals at a frequency N/T which is a multiple of the soliton clock frequency 1/T.

2. A transmission system according to claim 1, **characterized in that** the wavelengths $\lambda_1$ to $\lambda_n$, of the various channels of the multiplex are selected so that at a plurality of points of the transmission system that are spaced apart by an interval $Z_R$, the difference between the bit times of any two channels of the multiplex is substantially equal to a fraction kT/N of the clock period,

the system including, at each of said points, a synchronous modulator for modulating the soliton signals at a frequency N/T which is a multiple of the soliton clock frequency 1/T.

3. A transmission system according to claim 1 or 2, **characterized in that** the wavelengths, $\lambda_1$ to $\lambda_n$, of the various channels of the multiplex are selected in such a manner that at least at one other point of the transmission system, the difference between the bit times of any two channels of the multiplex is substantially equal to the clock period T,

the system including, at said at least one other point, a synchronous modulator for modulating the soliton signals at the soliton clock frequency 1/T.

4. A transmission system according to claim 1, 2, or 3, **characterized in that** the wavelengths, $\lambda_1$ to $\lambda_n$, of the various channels of the multiplex are selected in such a manner that at a plurality of other points of the transmission system spaced apart by an interval $Z_R$, the difference between the bit times of any two channels of the multiplex is substantially equal to the clock period T,

the system including at each of said other points a synchronous modulator for modulating the soliton signals at the soliton clock frequency 1/T.

5. A transmission system according to any one of claims 1 to 4, **characterized in that** at said point or at each of said points, the difference $d_i$ between the bit times of a channel of wavelength $\lambda_i$ of the multiplex and of the first channel of wavelength $\lambda_1$ satisfies the relationship:

$$|d_i - k_i.T/N| < T/4$$

where $k_i$ is an integer depending on the channel.

6. A transmission system according to any one of claims 3 to 5, **characterized in that** at said other point or at each of said other points, the difference $d_i$ between the bit times of a channel of wavelength $\lambda_i$ of the multiplex and of the first channel of wavelength $\lambda_1$ satisfies the relationship:

$$|d_i| < T/4$$

7. A transmission system according to any one of claims 1 to 6, **characterized in that** for each wavelength $\lambda_i$ of the multiplex, and for an interval $Z_R$, the difference $\Delta\tau_i$ between the slip per unit length on channel $\underline{i}$ and on the first channel satisfies the following relationship:

$$(k_i.T - T/4) < \delta\tau_i.Z_R < (k_i.T + T/4)$$

where $k_i$ is an integer depending on the channel.

8. A transmission system according to any one of claims 1 to 7, **characterized in that** the system is a system without dispersion slope compensation, and **in that** the wavelengths, $\lambda_1$ to $\lambda_n$, of the various channels of the multiplex are selected so that for an interval $Z_R$:

$$(k_i.T - T/4) < D'_0.\Delta\lambda_{i1}.(\Delta\lambda_{i1} + 2.\Delta\lambda_{10}).Z_R/2 < (k_i.T + T/4)$$

where:

> $k_i$ is an integer depending on the channel;
> $D'_0$ is the dispersion slope;
> $\delta\lambda_{i1}$ is the wavelength difference between channels $\underline{i}$ and 1; and
> $\delta\lambda_{10}$ is the wavelength difference between the first channel and the wavelength $\lambda_0$ having zero dispersion.

**9.** A transmission system according to any one of claims 1 to 7, **characterized in that** the system is a dispersion slope compensation system, and **in that** the wavelengths, $\lambda_1$ to $\lambda_n$, of the various channels of the multiplex are selected so that for an interval $Z_R$:

$$(k_i.T - T/4) < D_m.\Delta\lambda_{i1}.Z_R/2 < (k_i.T + T/4)$$

where:

> $k_i$ is an integer depending on the channel;
> $D_m$ is the mean dispersion slope for wavelengths $\lambda_1$ to $\lambda_n$; and
> $\delta\lambda_{i1}$ is the wavelength difference between channels $\underline{i}$ and 1.

**10.** A system according to any one of claims 1 to 9, **characterized in that** said modulator at the frequency N/T is an intensity modulator of modulation depth that is selected so as to compensate the effects of modulation at the frequency N/T on modulation depth compared with a modulator operating at the frequency 1/T.

**11.** A system according to any one of claims 1 to 10, **characterized in that** said modulator at the frequency N/T is an intensity modulator having modulation depth selected so as to compensate for the effects of modulation at the frequency N/T on modulation depth compared with a modulator operating at the frequency 1/T, which effects are expressed by the following formula:

$$IM_N = 20.\log(N) - 10.\log[N^2 - 1 + 10^{IM_1/10}]$$

where:

> $IM_N$ is the modulation depth of the modulator at the frequency N/T; and
> $IM_1$ is the modulation depth of the modulator at the frequency 1/T.

**12.** A method of transmitting soliton signals in an optical fiber system with wavelength division multiplexing, in which the bit times of the various channels $\lambda_1$ to $\lambda_n$ of the multiplex are selected in such a manner that at at least one point of the transmission system, the difference between the bit times of any two channels of the multiplex is substantially a submultiple T/N of the substantially synchronous clock period at at least one point,
the method being **characterized by** at least one step of synchronously regenerating the signals of the channels of the multiplex at said point by synchronous modulation at a frequency N/T which is a multiple of the soliton clock frequency 1/T.

**13.** A transmission method according to claim 12, **characterized in that** the wavelengths, $\lambda_1$ to $\lambda_n$, of the various channels of the multiplex are selected in such a manner that at a plurality of points of the transmission system that are spaced apart by an interval $Z_R$, the difference between the bit times of any two channels of the multiplex is substantially equal to a submultiple T/N of the clock period,
the method comprising a plurality of steps of synchronously regenerating the signals of the channels in the multiplex at each of said points by synchronous modulation at a frequency N/T which is a multiple of the soliton clock frequency 1/T.

**14.** A transmission method according to claim 12 or 13, **characterized in that** the wavelengths, $\lambda_1$ to $\lambda_n$, of the various channels of the multiplex are selected in such a manner that at at least one other point of the transmission system, the difference between the bit times of any two channels of the multiplex is substantially equal to the clock period T,
the method comprising a step of synchronously regenerating the signals of the channels of the multiplex at said at least one other point by synchronous modulation at the soliton clock frequency 1/T.

**15.** A transmission method according to claim 12, 13, or 14, **characterized in that** the wavelengths, $\lambda_1$ to $\lambda_n$, of the various channels of the multiplex are selected in such a manner that at a plurality of other points of the transmission system that are spaced apart by an interval $Z_R$, the difference between the bit times of any two channels of the multiplex is substantially equal to the clock period T,

the method comprising a plurality of steps of synchronously regenerating the signals of the multiplexed channels at each of said other points by synchronous modulation at the soliton clock frequency 1/T.

**16.** A transmission method according to any one of claims 12 to 15, **characterized in that** the wavelengths, $\lambda_1$ to $\lambda_n$, of the various channels of the multiplex are selected in such a manner that at said point or at each of said points, the difference $d_i$ between the bit times of a channel of the multiplex of wavelength $\lambda_i$ and of the first channel of wavelength $\lambda_1$ satisfies the relationship:

$$|d_i - k_i.T/N| < T/4$$

where $k_i$ is an integer depending on the channel.

**17.** A transmission method according to any one of claims 14 to 16, **characterized in that** the wavelengths, $\lambda_1$ to $\lambda_n$, of the various channels of the multiplex are selected in such a manner that at said other point or at each of said other points, the difference $d_i$ between the bit times of a channel of wavelength $\lambda_i$ of the multiplex and of the first channel of wavelength $\lambda_1$ satisfies the relationship:

$$|d_i| < T/4$$

**18.** A transmission method according to any one of claims 12 to 17, **characterized in that** the wavelengths, $\lambda_1$ to $\lambda_n$, of the various channels of the multiplex are selected in such a manner that for all of the wavelengths $\lambda_i$ of the multiplex, and for an interval $Z_R$, the difference $\Delta\tau_i$ between the slip per unit length on channel $\underline{i}$ and on the first channel satisfies the relationship:

$$(k_i.T - T/4) < \delta\tau_i.Z_R < (k_i.T + T/4)$$

where $k_i$ is an integer depending on the channel.

**19.** A transmission method according to any one of claims 12 to 18, **characterized in that** the system is a system without dispersion slope compensation, and **in that** the wavelengths, $\lambda_1$ to $\lambda_n$, of the various channels of the multiplex are selected in such a manner that for an interval $Z_R$:

$$(k_i.T - T/4) < D'_0.\Delta\lambda_{i1}.(\Delta\lambda_{i1} + 2.\Delta\lambda_{10}).Z_R/2 < (k_i.T + T/4)$$

where:

$k_i$ is an integer depending on the channel;
$D'_0$ is the dispersion slope;
$\delta\lambda_{i1}$ is the wavelength difference between channels $\underline{i}$ and 1; and
$\delta\lambda_{10}$ is the wavelength difference between the first channel and the wavelength $\lambda_0$ at which dispersion is zero.

**20.** A transmission method according to any one of claims 12 to 18, **characterized in that** the system is a system with dispersion slope compensation, and **in that** the wavelengths, $\lambda_1$ to $\lambda_n$, of the various channels of the multiplex are selected in such a manner that for an interval $Z_R$:

$$(k_i.T - T/4) < D_m.\Delta\lambda_{i1}.Z_R < (k_i.T + T/4)$$

where:

$k_i$ is an integer depending on the channel;
$D_m$ is the mean dispersion slope for the wavelengths $\lambda_1$ to $\lambda_n$; and
$\delta\lambda_{i1}$ is the wavelength difference between channels $\underline{i}$ and 1.

**21.** A method according to any one of claims 12 to 20, **characterized in that** the synchronous modulation at the frequency N/T is intensity modulation with modulation depth selected to compensate the effects of modulation at the frequency N/T on modulation depth compared with a modulator operating at the frequency 1/T, said effects being expressed by the following formula:

$$IM_N = 20.\log(N) - 10.\log[N^2 - 1 + 10^{IM_1/10}]$$

where:

$IM_N$ is the modulation depth of the modulator at the frequency N/T; and
$IM_1$ is the modulation depth of the modulator at the frequency 1/T.

**Patentansprüche**

**1.** Faseroptisches WDM- und Soliton-Übertragungssystem mit einer Taktperiode T, bei dem die Wellenlängen ($\lambda_1$ bis $\lambda_n$) der verschiedenen Multiplexkanäle so gewählt sind, dass mindestens in einem Punkt des Übertragungssystems die Differenz zwischen den Bitzeiten von zwei Multiplex-Kanälen ungefähr einem Bruch (k/N)T der Taktperiode entspricht, wobei k eine ganze Zahl ist;
hierbei weist das System mindestens an dem genannten Punkt einen synchronen Modulator auf, um die Soliton-Signale mit einer Frequenz N/T zu modulieren, die ein Vielfaches der Soliton-Taktfrequenz 1/T ist.

**2.** Übertragungssystem nach Anspruch 1, **dadurch gekennzeichnet, dass** die Wellenlängen ($\lambda_1$ bis $\lambda_n$) der verschiedenen Multiplexkanäle so gewählt sind, dass in einer Vielzahl von Punkten des Übertragungssystems im Abstand eines Intervalls ($Z_R$) die Differenz zwischen den Bitzeiten von zwei Multiplexkanälen ungefähr einem Bruch (k/N)T der Taktperiode entspricht,
wobei das System in jedem dieser Punkte einen synchronen Modulator zum Modulieren der Soliton-Signale mit einer Frequenz N/T aufweist, die ein Vielfaches der Soliton-Taktfrequenz 1/T ist.

**3.** Übertragungssystem nach Anspruch 1 oder 2, **dadurch gekennzeichnet, dass** die Wellenlängen ($\lambda_1$ bis $\lambda_n$) der verschiedenen Multiplexkanäle so gewählt sind, dass mindestens in einem Punkt des Übertragungssystems die Differenz zwischen den Bitzeiten von zwei Multiplexkanälen ungefähr gleich der Taktperiode T ist,
wobei das System an diesem mindestens einen Punkt einen synchronen Modulator zum Modulieren der Soliton-Signale mit der Soliton-Taktfrequenz 1/T aufweist.

**4.** Übertragungssystem nach Anspruch 1, 2 oder 3, **dadurch gekennzeichnet, dass** die Wellenlängen ($\lambda_1$ bis $\lambda_n$) der verschiedenen Multiplexkanäle so gewählt sind, dass in einer Vielzahl weiterer Punkte des Übertragungssystems im Abstand eines Intervalls ($Z_R$) die Differenz zwischen den Bitzeiten von zwei Multiplexkanälen ungefähr gleich der Taktperiode T ist,
wobei das System in jedem dieser anderen Punkte einen synchronen Modulator aufweist, um die Soliton-Signale mit der Soliton-Taktfrequenz 1/T zu modulieren.

**5.** Übertragungssystem nach einem der Ansprüche 1 bis 4, **dadurch gekennzeichnet, dass** an dem genannten Punkt oder in jedem der genannten Punkte die Differenz $d_i$ zwischen den Bitzeiten eines Multiplexkanals mit einer Wellenlänge $\lambda_i$ und des ersten Kanals mit einer Wellenlänge $\lambda_1$ die folgende Beziehung erfüllt:

$$|d_i - k_i.T/N| < T/4$$

mit $k_i$ gleich einer vom Kanal abhängigen ganzen Zahl.

**6.** Übertragungssystem nach einem der Ansprüche 3 bis 5, **dadurch gekennzeichnet, dass** an dem genannten Punkt oder in jedem der genannten anderen Punkte die Differenz $d_i$ zwischen den Bitzeiten eines Multiplex-Kanals

mit einer Wellenlänge $\lambda_i$ und des ersten Kanals mit einer Wellenlänge $\lambda_1$ die folgende Beziehung erfüllt:

$$|d_i| < T/4$$

**7.** Übertragungssystem nach einem der Ansprüche 1 bis 6, **dadurch gekennzeichnet, dass** für jede Multiplex-Wellenlänge $\lambda_i$ und für ein Intervall ($Z_R$) die Differenz $\delta\tau_i$ zwischen der Abweichung pro Längeneinheit auf dem Kanal i und auf dem ersten Kanal die folgende Beziehung erfüllt:

$$(k_i.T - T/4) < \delta\tau_i.Z_R < (k_i.T + T/4)$$

mit $k_i$ gleich einer vom Kanal abhängigen ganzen Zahl.

**8.** Übertragungssystem nach einem der Ansprüche 1 bis 7, **dadurch gekennzeichnet, dass** das System ein System ohne Kompensation des Dispersions-Richtungskoeffizienten ist, sowie dadurch, dass die Wellenlängen ($\lambda_1$ bis $\lambda_n$) der verschiedenen Multiplexkanäle so gewählt sind, dass für ein Intervall ($Z_R$) gilt:

$$(k_i.T - T/4) < D'_0.\ \Delta\lambda_{i1}.(\Delta\lambda_{i1} + 2.\Delta\lambda_{10}).Z_R/2 < (k_i.T + T/4)$$

mit

$k_i$ gleich einer vom Kanal abhängigen ganzen Zahl;
$D'_0$ gleich dem Dispersions-Richtungskoeffizienten;
$\Delta\lambda_{i1}$ gleich der Wellenlängendifferenz zwischen den Kanälen i und 1;
$\Delta\lambda_{10}$ gleich der Wellenlängendifferenz zwischen dem ersten Kanal und der Wellenlänge mit der Dispersion Null $\lambda_0$.

**9.** Übertragungssystem nach einem der Ansprüche 1 bis 7, **dadurch gekennzeichnet, dass** das System ein System mit Kompensation des Dispersions-Richtungskoeffizienten ist, sowie dadurch, dass die Wellenlängen ($\lambda_1$ bis $\lambda_n$) der verschiedenen Multiplexkanäle so gewählt sind, dass für ein Intervall ($Z_R$) gilt:

$$(k_i.T - T/4) < D_m.\ \Delta\lambda_{i1}.Z_R/2 < (k_i.T + T/4)$$

mit

$k_i$ gleich einer vom Kanal abhängigen ganzen Zahl;
$D_m$ gleich dem mittleren Dispersions-Richtungskoeffizienten für die Wellenlängen ($\lambda_1$ bis $\lambda_n$);
$\Delta\lambda_{i1}$ gleich der Wellenlängendifferenz zwischen den Kanälen i und 1.

**10.** System nach einem der Ansprüche 1 bis 9, **dadurch gekennzeichnet, dass** der Modulator mit der Frequenz N/T ein Intensitätsmodulator ist, dessen Modulationstiefe so gewählt wird, dass gegenüber einem Modulator mit der Frequenz 1/T die Auswirkungen der Modulation mit der Frequenz N/T auf die Modulationstiefe kompensiert werden.

**11.** System nach einem der Ansprüche 1 bis 10, **dadurch gekennzeichnet, dass** der Modulator mit der Frequenz N/T ein Intensitätsmodulator ist, dessen Modulationstiefe so gewählt wird, dass gegenüber einem Modulator mit der Frequenz 1/T die Auswirkungen der Modulation mit der Frequenz N/T auf die Modulationstiefe kompensiert werden, ausgedrückt durch folgende Formel:

$$IM_N = 20.\log(N) - 10.\log[N^2 - 1 + 10^{\wedge}(IM_1/10)]$$

mit

$IM_N$ gleich der Modulationstiefe des Modulators mit der Frequenz N/T;

$IM_1$ gleich der Modulationstiefe des Modulators mit der Frequenz 1/T.

**12.** Soliton- und WDM-Übertragungsverfahren in einem faseroptischen System, in dem die Bitzeiten der verschiedenen Multiplexkanäle ($\lambda_1$ bis $\lambda_n$) so gewählt sind, dass an mindestens einem Punkt des Übertragungssystems die Differenz zwischen den Bitzeiten der beiden Multiplexkanäle ungefähr einem Teiler T/N der Taktperiode entspricht, wobei diese in mindestens einem Punkt ungefähr synchron sind,

**gekennzeichnet durch** mindestens einen Schritt zur synchronen Regeneration der Multiplexkanalsignale an dem genannten Punkt **durch** synchrone Modulation mit der Frequenz N/T, die ein Vielfaches der Soliton-Taktfrequenz 1/T ist.

**13.** Übertragungsverfahren nach Anspruch 12, **dadurch gekennzeichnet, dass** die Wellenlängen ($\lambda_1$ bis $\lambda_n$) der verschiedenen Multiplexkanäle so gewählt sind, dass in einer Vielzahl von Punkten des Übertragungssystems im Abstand eines Intervalls ($Z_R$) die Differenz zwischen den Bitzeiten der beiden Multiplexkanäle ungefähr einem Teiler T/N der Taktperiode entspricht;

wobei das Verfahren eine Vielzahl von Schritten zur synchronen Regeneration der Multiplexkanalsignale an jedem der genannten Punkte durch synchrone Modulation mit einer Frequenz N/T aufweist, die ein Vielfaches der Soliton-Taktfrequenz 1/T ist.

**14.** Übertragungsverfahren nach Anspruch 12 oder 13, **dadurch gekennzeichnet, dass** die Wellenlängen ($\lambda_1$ bis $\lambda_n$) der verschiedenen Multiplexkanäle so gewählt sind, dass in mindestens einem weiteren Punkt des Übertragungssystems die Differenz zwischen den Bitzeiten der beiden Multiplexkanäle ungefähr gleich der Taktperiode ist;

wobei das Verfahren einen Schritt zur synchronen Regeneration der Multiplexkanalsignale an dem genannten mindestens einen Punkt durch synchrone Modulation für die Soliton-Taktfrequenz 1/T aufweist.

**15.** Übertragungsverfahren nach Anspruch 12, 13 oder 14, **dadurch gekennzeichnet, dass** die Wellenlängen ($\lambda_1$ bis $\lambda_n$) der verschiedenen Multiplexkanäle so gewählt sind, dass in einer Vielzahl weiterer Punkte des Übertragungssystems im Abstand eines Intervalls ($Z_R$) die Differenz zwischen den Bitzeiten der beiden Multiplexkanäle ungefähr gleich der Taktperiode T ist;

wobei das Verfahren eine Vielzahl von Schritten zur synchronen Regeneration der Multiplexkanalsignale an jedem der genannten weiteren Punkte durch synchrone Modulation mit der Soliton-Taktfrequenz 1/T aufweist.

**16.** Übertragungsverfahren nach einem der Ansprüche 12 bis 15, **dadurch gekennzeichnet, dass** die Wellenlängen ($\lambda_1$ bis $\lambda_n$) der verschiedenen Multiplexkanäle so gewählt sind, dass an dem genannten Punkt oder in jedem der genannten Punkte die Differenz $d_i$ zwischen den Bitzeiten eines Multiplexkanals mit einer Wellenlänge $\lambda_i$ und des ersten Kanals mit einer Wellenlänge $\lambda_1$ die folgende Beziehung erfüllt:

$$|d_i - k_i.T/N| < T/4$$

mit $k_i$ gleich einer vom Kanal abhängigen ganzen Zahl.

**17.** Übertragungsverfahren nach einem der Ansprüche 14 bis 16, **dadurch gekennzeichnet, dass** die Wellenlängen ($\lambda_1$ bis $\lambda_n$) der verschiedenen Multiplexkanäle so gewählt sind, dass an dem genannten Punkt oder in jedem der genannten anderen Punkte die Differenz $d_i$ zwischen den Bitzeiten eines Multiplexkanals mit einer Wellenlänge $\lambda_i$ und des ersten Kanals mit einer Wellenlänge $\lambda_1$ die folgende Beziehung erfüllt:

$$|d_i| < T/4$$

**18.** Übertragungsverfahren nach einem der Ansprüche 12 bis 17, **dadurch gekennzeichnet, dass** die Wellenlängen ($\lambda_1$ bis $\lambda_n$) der verschiedenen Multiplexkanäle so gewählt sind, dass für jede Multiplex-Wellenlänge $\lambda_i$ und für ein Intervall ($Z_R$) die Differenz $\delta\tau_i$ zwischen der Abweichung pro Längeneinheit auf dem Kanal i und auf dem ersten Kanal die folgende Beziehung erfüllt:

$$(k_i.T - T/4) < \delta\tau_i.Z_R < (k_i.T + T/4)$$

mit $k_i$ gleich einer vom Kanal abhängigen ganzen Zahl.

**19.** Übertragungsverfahren nach einem der Ansprüche 12 bis 18, **dadurch gekennzeichnet, dass** das System ein System ohne Kompensation des Dispersions-Richtungskoeffizienten ist, sowie dadurch, dass die Wellenlängen ($\lambda_1$ bis $\lambda_n$) der verschiedenen Multiplexkanäle so gewählt sind, dass für ein Intervall ($Z_R$) gilt:

$$(k_i.T - T/4) < D'_0. \Delta\lambda_{i1}.(\Delta\lambda_{i1} + 2.\Delta\lambda_{10}).Z_R/2 < (k_i.T + T/4)$$

mit

$k_i$ gleich einer vom Kanal abhängigen ganzen Zahl;
$D'_0$ gleich dem Dispersions-Richtungskoeffizienten;
$\Delta\lambda_{i1}$ gleich der Wellenlängendifferenz zwischen den Kanälen i und 1;
$\Delta\lambda_{10}$ gleich der Wellenlängendifferenz zwischen dem ersten Kanal und der Wellenlänge mit der Dispersion Null $\lambda_0$.

**20.** Übertragungsverfahren nach einem der Ansprüche 12 bis 18, **dadurch gekennzeichnet, dass** das System ein System mit Kompensation des Dispersions-Richtungskoeffizienten ist, sowie dadurch, dass die Wellenlängen ($\lambda_1$ bis $\lambda_n$) der verschiedenen Multiplexkanäle so gewählt sind, dass für ein Intervall ($Z_R$) gilt:

$$(k_i.T - T/4) < D_m. \Delta\lambda_{i1}.Z_R/2 < (k_i.T + T/4)$$

mit

$k_i$ gleich einer vom Kanal abhängigen ganzen Zahl;
$D_m$ gleich dem mittleren Dispersions-Richtungskoeffizienten für die Wellenlängen ($\lambda_1$ bis $\lambda_n$);
$\Delta\lambda_{i1}$ gleich der Wellenlängendifferenz zwischen den Kanälen i und 1.

**21.** Verfahren nach einem der Ansprüche 12 bis 20, **dadurch gekennzeichnet, dass** die synchrone Modulation mit der Frequenz N/T eine Intensitätsmodulation ist, deren Modulationstiefe so gewählt wird, dass gegenüber einem Modulator mit der Frequenz 1/T die Auswirkungen der Modulation mit der Frequenz N/T auf die Modulationstiefe kompensiert werden, ausgedrückt durch folgende Formel:

$$IM_N = 20.\log(N) - 10.\log[N^2 - 1 + 10\hat{}(IM_1/10)]$$

mit

$IM_N$ gleich der Modulationstiefe des Modulators mit der Frequenz N/T;
$IM_1$ gleich der Modulationstiefe des Modulators mit der Frequenz 1/T.

FIG_1

FIG_2